# EUROPEAN PATENT APPLICATION

(11) **EP 1 785 815 A2**
(43) Date of publication of application: **16.05.2007**
(21) Application number: 06022550.5
(22) Date of filing: 27.10.2006
(51) Int. Cl.: G06F 3/023

(54) **Method for inputting keys in a portable terminal**

(30) Priority: 11.11.2005 KR 20050108253
(71) Applicant: Samsung Electronics Co., Ltd., Suwon-si, Gyeonggi-Do (KR)
(72) Inventor: Kim, Jin-Sik, Yeongtong-gu Suwon-si Gyeonggi-do (KR); Choe, Gwang-Woo, Yeongtong-gu Suwon-si Gyeonggi-do (KR); Park, Seong-Jin, Yeongtong-gu Suwon-si Gyeonggi-do (KR)
(74) Representative: Lang, Johannes

(57) **Abstract**

Disclosed is a method for inputting keys in a portable terminal, which is convenient and efficient. The method includes displaying one letter of at least two letters disposed in a predetermined key of the portable terminal, if a first input time period elapses while key input is performed for the predetermined key, the two letters disposed in the predetermined key are displayed, if a second input time period, longer than the first input time period, elapses while the key input is performed for the predetermined key. The one letter of the at least two letters is continuously displayed in a way that corresponds to the input time of the predetermined key, if a third input time period, longer than the second input time period, elapses while the key input is performed for the predetermined key.

## Description

### BACKGROUND OF THE INVENTION

### 1. Field of the Invention

The present invention relates to a method for inputting keys in a portable terminal. More particularly, the present invention relates to a method for inputting keys in a portable terminal, which is both convenient and efficient.

### 2. Description of the Related Art

A general portable terminal includes a 3 by 4 keypad in an alphabet order arrangement. In the 3 by 4 keypad, three or four alphabet letters are disposed in each key for input of the alphabet letters. However, in the 3 by 4 keypad, pressing one key four times is sometimes necessary in order to input one alphabet letter. Since the 3 by 4 keypad does not employ a QWERTY arrangement which is employed in a personal computer (PC), but employs the alphabet order arrangement, it is inconvenient to users familiar to the input manner of PCs.

Recently, a 5 by 4 keypad employing the QWERTY arrangement instead of the 3 by 4 keypad has been supplied.

In the 5 by 4 keypad employing the QWERTY arrangement, each letter is displayed when a key corresponding to the letter is shortly pressed either once or several times. However, in order to repeatedly input an identical letter, it is necessary to repeat pressing of the corresponding key with a wait interval between the pressings. Also, in order to sequentially input two letters disposed in one key, it is necessary to press the key at least two or three times.

Accordingly, there is a need for an improved method for inputting keys, at a reduced number of key inputs, in a portable terminal.

### SUMMARY OF THE INVENTION

An aspect of embodiments of the present invention is to address at least the above problems and/or disadvantages and to provide at least the advantages described below. Accordingly, an aspect of embodiments of the present invention is to provide a method for inputting keys in a portable terminal, which is both convenient and efficient.

In order to accomplish this object, there is provided a method for inputting keys in a portable terminal. The method includes displaying one of at least two letters assigned to a predetermined key of the portable terminal, if a first input time period elapses while key input is performed for the predetermined key. The two letters assigned to the predetermined key are displayed, if a second input time period, longer than the first input time period, elapses while the key input is performed for the predetermined key. The one of at least two letters displayed is continuously displayed in a way that corresponds to the input time of the predetermined key, if a third input time period, longer than the second input time period, elapses while the key input is performed for the predetermined key.

There is also provided a method for inputting keys in a portable terminal. The method includes displaying one of at least two letters assigned to a predetermined key of the portable terminal, if a first input time period elapses while key input is performed for the predetermined key. A second letter of the at least two letters assigned to the predetermined key is displayed, if the first input time period elapses while key input is performed for the predetermined key before lapse of a predetermined time period. The two letters assigned to the key are displayed, if a second input time period longer than the first input time period elapses while the key input is performed for the predetermined key. The one of at least two letters is continuously displayed in a way that corresponds to the input time of the key, if a third input time period, longer than the second input time period, elapses while the key input is performed for the predetermined key.

There is also provided a method for inputting keys in which two letters are assigned to each key, in a portable terminal. The method includes displaying a first of the two letters assigned to a predetermined key, if a first input time period elapses while key input is performed for the predetermined key. The two letters assigned to the predetermined key are displayed, if a second input time period, longer than the first input time period, elapses while the key input is performed for the predetermined key. The first of the two letters are continuously displayed in a way that corresponds to the input time of the predetermined key, if a third input time period, longer than the second input time period, elapses while the key input is performed for the predetermined key.

There is further provided a method for inputting keys in which two letters are assigned to each key, in a portable terminal. The method includes displaying a first of the two letters assigned to a predetermined key of the portable terminal, if a first input time period elapses while key input is performed for the predetermined key. A second of the two letters assigned to the predetermined key is displayed, if the first input time period elapses while key input is performed for the predetermined key before lapse of a predetermined time period. The two letters assigned to the predetermined key are displayed, if a second input time period, longer than the first input time period, elapses while the key input is performed for the predetermined key. The second of the two letters is continuously displayed in a way that corresponds to the input time of the key, if a third input time period, longer than the second input time period, elapses while the key input is performed for the predetermined key.

Other objects, advantages, and salient features of the invention will become apparent to those skilled in the art from the following detailed description, which taken in conjunction with the annexed drawings, discloses exemplary embodiments of the invention.

### BRIEF DESCRIPTION OF THE DRAWINGS

The above and other objects, features, and advantages of certain exemplary embodiments of the present invention will be more apparent from the following detailed description taken in conjunction with the accompanying drawings, in which:
FIG. 1 is a block diagram of a portable terminal according to an exemplary embodiment of the present invention;
FIG. 2 is a view for showing the key arrangement of a key input section of FIG. 1;
FIG. 3 is a flow chart for describing a process in which a first letter assigned to a key of a portable terminal is input according to an exemplary embodiment of the present invention; and
FIG. 4 is a flow chart for describing a process in which a second letter assigned to a key of a portable terminal is input according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope of the invention. Also, descriptions of well-known functions and constructions are omitted for clarity and conciseness.

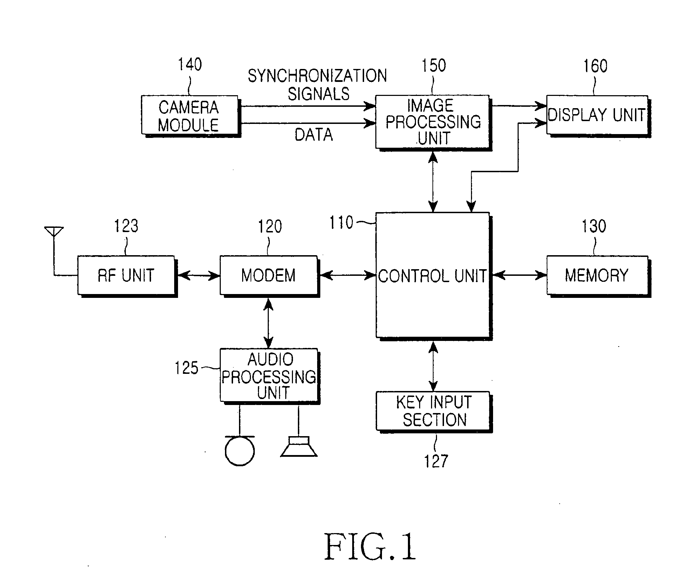

FIG. 1 is a block diagram of a portable terminal according to an exemplary embodiment of the present invention.

Referring to FIG. 1, an RF unit 123 performs a radio communication function of the portable terminal. The RF unit 123 includes an RF transmitter which raises and amplifies frequencies of transmitted signals and an RF receiver which amplifies received signals with low noises and lowers the frequencies. A modem 120 includes a transmitter which encodes and modulates the transmitted signals and a receiver which demodulates and decodes the received signals. An audio processing unit 125 may include a codec, which includes a data codec that processes packet data, and an audio codec that processes audio signals of voices. The audio processing unit 125 converts the digital audio signals received in the modem 120 to analog signals through the audio codec. The audio processing unit 125 also reproduces the audio signals, or converts the analog audio signals generated in a microphone to digital signals through the audio codec, and transmits the digital signals to the modem 120. The codec can be provided either separately or in a control unit 110.

A memory 130 includes a program memory and a data memory. The program memory can store both programs for controlling general operations of the portable terminal and for controlling the portable terminal to display the letters disposed in the keys according to a number of key input, according to an exemplary embodiment of the present invention. Further, the data memory temporarily stores the data generated while performing the programs.

The control unit 110 controls the overall operation of the portable terminal. The control unit 110 can include the modem 120 and the codec. The control unit 110 controls the portable terminal, according to an exemplary embodiment of the present invention, so that if a first input time period elapses while key input is performed for one of the keys provided in a key input section 127, one of the at least two letters disposed in the input key, for example, a first letter, is displayed. The control unit 110 further controls the portable terminal, according to an exemplary embodiment of the present invention, so that if a second input time period, longer than the first input time period, elapses while the key input is performed, both of the two letters disposed in the input key are displayed sequentially. The control unit 110 also controls the portable terminal, according to an exemplary embodiment of the present invention, so that if a third input time period, longer than the second input time period, elapses while the key input is performed, one of the at least two letters disposed in the input key, that is, the first letter, is continuously displayed in a way that corresponds to the input time of the key.

Further, the control unit 110 controls the portable terminal, according to an exemplary embodiment of the present invention, so that if a first input time period elapses while key input is performed for one of the keys provided in a key input section 127, one of the at least two letters disposed in the input key, for example, a first letter, is displayed. If the first input time period elapses while key input is performed for the key before lapse of a predetermined time period, a second letter of the at least two letters, for example, a second letter, is displayed. The control unit 110 also controls the portable terminal, according to an exemplary embodiment of the present invention, so that if a second input time period, longer than the first input time period, elapses while the key input is performed, the two letters disposed in the input key are displayed sequentially with the second letter being the first displayed letter. The control unit 110 further controls the portable terminal, according to an exemplary embodiment of the present invention, so that if a third input time period, longer than the second input time period, elapses while the key input is performed, a second letter of the two letters disposed in the input key, that is, the second letter, is continuously displayed in a way that corresponds to the input time of the key.

A camera module 140 photographs image data, and includes a camera sensor converting the photographed optical signals to electrical signals, and a signal processing unit converting the analog image signals photographed by the camera sensor to digital data. Here, the camera sensor is preferably a Charged Coupled Device (CCD) sensor, and the signal processing unit may be embodied with a Digital Signal Processor (DSP). Further, the camera sensor and the signal processing unit may be embodied either integrally or separately.

The image processing unit 150 generates screen data for displaying the image signals output from the camera module 140. The image processing unit 150 processes the image signal output from the camera module 140 in a frame unit, and outputs the frame image data in a way that corresponds to the characteristics and size of the display unit 160. The image processing unit 150 includes an image codec, and compresses the frame image data displayed in the display unit 160 in a predetermined manner or restores the compressed frame image data to the original frame image data. Here, the image codec may be a JPEG codec, MPEG4 codec, or Wavelet codec. The image processing unit 150 preferably includes an On Screen Display (OSD) function, and can output OSD data according to the screen size displayed under the control of the control unit 110.

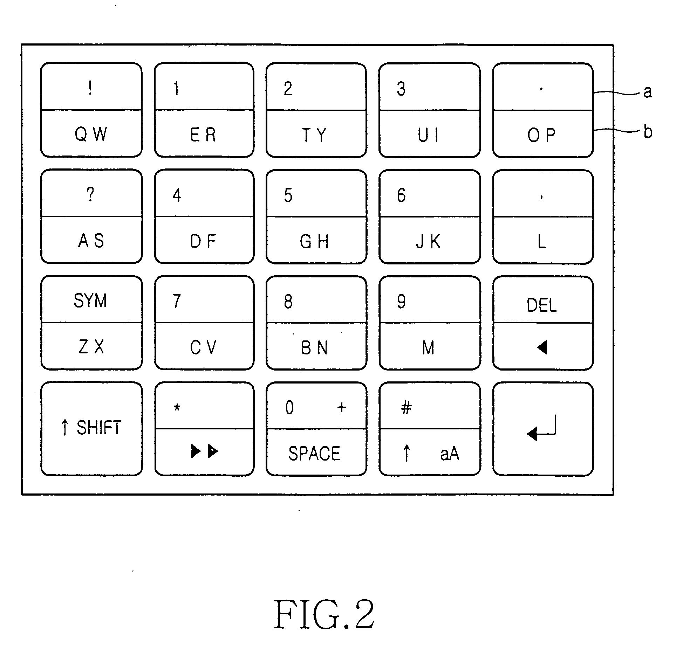

The display unit 160 displays the image signals output from the image processing unit 150 on a screen, and displays the user data output from the control unit 110. Here, the display unit 160 may employ a Liquid Crystal Display (LCD). In this case, the display unit 160 may include an LCD controller, a memory for storing image data, and an LCD display device. Here, if the LCD is embodied in a touch screen manner, it can be operated as an input section. The key input section 127 includes keys for inputting number and letter information, and also includes function keys for setting various functions. Further, the key input section 127 includes a 5 by 4 keypad adopting the QWERTY arrangement, as shown in FIG. 2.

Referring to FIG. 2 to describe the key input section 127, each of the keys in the key input section 127 has an upper area a, and a lower area b. Numbers and special letters are disposed in the upper area a. If a mode of the portable terminal is converted to a shift key input mode by inputting and activating the shift key, the numbers or special letters disposed in the upper area a are input and displayed by the corresponding key inputs. Further, if the shift key is input twice and the shift key input mode is released, the keys disposed in the lower area b are input when the corresponding keys are input. In the lower area b, one or two letters, or function keys are disposed.

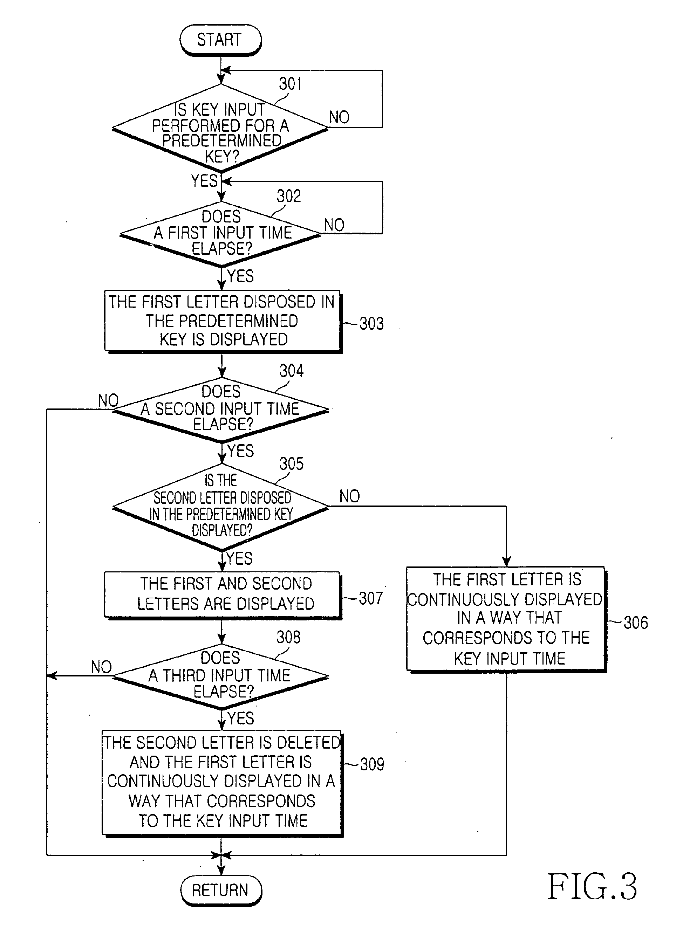

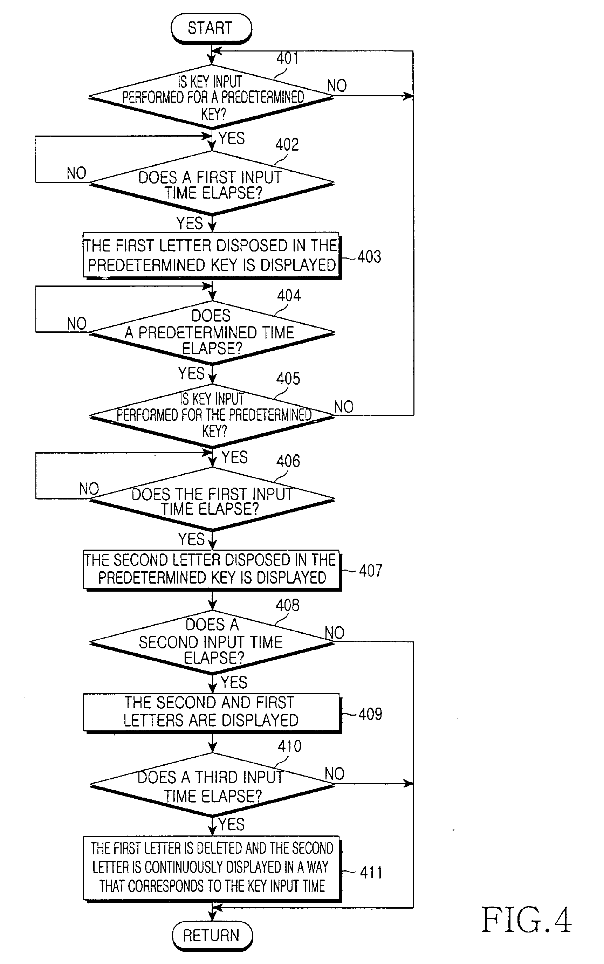

Hereinafter, the key input operation of the portable terminal will be described in detail with reference to FIGs. 3 and 4. FIGs. 3 and 4 exemplify a key input section, having a 5 by 4 keypad of the QWERTY arrangement, and a manner in which one or two of the letters disposed in the lower area of each of the keys in the key input section are input.

FIG. 3 is a flow chart for describing a process in which a first letter disposed in a key of the portable terminal is input, according to an exemplary embodiment of the present invention.

Hereinafter, an exemplary embodiment of the present invention will be described in detail with reference to FIGs. 1 and 2.

Referring to FIG. 3, if a key is input in a letter input mode of the portable terminal, the control unit 110 detects the key input in Step 301 and determines the key input time. After a first input time period elapses, the control unit 110 detects the time elapse in Step 302 and proceeds with Step 303 in which the first of the letters disposed in the input key is displayed in the display unit 160.

Then, if the key is input further, and a second input time period, longer than the first input time period, elapses, the control unit 110 detects the second input time elapse in Step 304 and determines whether the second letter is disposed in the key. If the second letter is not disposed in the key, the control unit 110 detects the second letter not disposed in Step 305 and proceeds with Step 306 in which the first letter is continuously displayed in a way that corresponds to the input time of the key.

However, if the second letter is disposed in the key, the control unit 110 detects the second letter in Step 305 and proceeds with Step 307 in which the first and second letters disposed in the key are sequentially displayed.

If the key is input further, and a third input time period, longer than the second input time period, elapses in a state in which the first and second letters are sequentially displayed, the control unit 110 detects the third input time elapse in Step 308 and proceeds with Step 309 in which the second letter is deleted and only the first letter is continuously displayed in a way that corresponds to the input time of the key.

As an example, the operations for displaying 'eeeeeeeeee' through the process of FIG. 3 are as follows. If the first input time period elapses while key input is performed for the 'No. 1 key' in which 'ER' is disposed, as shown in FIG. 2, 'e' is displayed. Then, if the second input time period elapses while key input is performed for the 'No. 1 key', 'er' is displayed. In a state in which the 'er' is displayed, if the third input time period elapses while key input is performed for the 'No. 1 key', the 'r' is deleted and only 'e's are continuously displayed in a way that corresponds to the key input time. As a result, it is possible to display 'e' ten times by performing the key input once.

FIG. 4 is a flow chart for describing a process in which a second letter disposed in a key of a portable terminal is input according to an exemplary embodiment of the present invention.

Hereinafter, an exemplary embodiment of the present invention will be described in detail with reference to FIGs. 1 and 2.

Referring to FIG. 4, if a key is input in a letter input mode of the portable terminal, the control unit 110 detects the key input in Step 401 and determines the key input time. If a first input time period elapses, the control unit 110 detects the first input time elapse in Step 402 and proceeds with Step 403 in which the first of the letters disposed in the input key is displayed in the display unit 160.

If the key is input after the first letter is displayed and before a predetermined time period elapses, the control unit 110 detects the key input through Steps 404 and 405 and determines the key input time. Then, if the first input time period elapses, the control unit 110 detects the time elapse in Step 406 and proceeds with Step 407 in which the second of the letters disposed in the key is displayed in the display unit 160.

If the key input is further performed and a second input time period, longer than the first input time period, elapses, the control unit 110 detects the second input time elapse in Step 408 and proceeds with Step 409 in which the second and the first of the letters disposed in the key are sequentially displayed.

In a state in which the second and first letters are sequentially displayed, if the key input is further performed and a third input time period, longer than the second input time period, elapses, the control unit 110 detects the third input time elapse in Step 410 and proceeds with Step 411 in which the first letter is deleted and only the second letter is continuously displayed in a way that corresponds to the input time of the key.

As an example, the operations for displaying 'rrrrrrrrrr' through the process of FIG. 4 are as follows. If the first input time period elapses while key input is performed for the 'No. 1 key' in which 'ER' is disposed, as shown in FIG. 2, 'e' is displayed. Then, if another first input time period elapses while key input is performed for the 'No. 1 key', 'r' is displayed. In a state in which the 'r' is displayed, if the second input time period elapses while the key input is continuously performed for the 'No. 1 key', 're' is displayed. In a state in which the 're' is displayed, if the third input time period elapses while the key input is continuously performed for the 'No. 1 key', the 'e' is deleted and only 'r's are continuously displayed in a way that corresponds to the key input time. As a result, the key inputs for displaying the 'r' ten times are performed by the input of the 'No. 1 key' for displaying 'e' and the re-input of the "No. 1 key' for displaying 'r'.

As another example, the operations for displaying 'ghost' through the processes of FIGs. 3 and 4 are as follows. If the second input time period elapses while key input is performed for the 'No. 5 key', in which 'GH' is disposed, 'gh' is displayed. Then, if the first input time period elapses while key input is performed for the '. key' in which 'OP' is disposed, 'gho' is displayed. Then, the first key input period elapses while key input is performed for the '? key' in which 'AS' is disposed. The first input time period elapses again and 'ghos' is displayed. In a state in which 'ghos' is displayed, if the first input time period elapses while key input is performed for the 'No. 2 key' in which 'TY' is disposed, 'ghost' is displayed.

The processes of FIGs. 3 and 4 in which 'ghost' is displayed by only a number of six key inputs reduces the number of key inputs, compared with conventional art in which 'ghost' is input by a number of eight key inputs.

In an exemplary embodiment of the present invention, the inputs of the letters disposed on the lower area b of the keys are exemplified, but the present invention can also be applied to the numbers or special letters disposed in the upper area a through the processes of FIGs. 3 and 4. In order to display the numbers or special letters disposed in the upper area a, the keys should be input in the shift key input mode in which the shift key is activated.

Therefore, the present invention provides a key input method which reduces the number of key inputs, thereby conveniently and efficiently inputting letters. While the illustrated and exemplary embodiments of the present invention improves inputting letters, it is to be understood that the present invention is applicable to the input of other types of symbols or characters for which two or more symbols or characters can be assigned to the same key on a keypad and accessible in the same shift key operation (that is, if plural symbols are assigned to a key and selected via a shift key or similar operation).

While the invention has been shown and described with reference to a certain exemplary embodiments thereof, it will be understood by those skilled in the art that various changes in form and details may be made therein without departing from the spirit and scope of the invention as defined by the appended claims.

## Claims

1. A method for inputting keys in a portable terminal, the method comprising the steps of:
displaying one of at least two symbols assigned to a predetermined key of the portable terminal, if a first input time period elapses while key input is performed for the predetermined key;
displaying the two symbols assigned to the predetermined key, if a second input time period, longer than the first input time period, elapses while the key input is performed for the predetermined key; and
continuously displaying the one symbol of the at least two symbols in a way that corresponds to the input time of the predetermined key, if a third input time period, longer than the second input time period, elapses while the key input is performed for the predetermined key.

2. A method according to claim 1, wherein the one symbol of the at least two symbols displayed is the first of the two symbols assigned to the predetermined key.

3. A method according to claim 1, wherein the two symbols displayed are displayed in an order in which the symbols are assigned to the predetermined key.

4. A method for inputting keys in a portable terminal, the method comprising the steps of:
displaying one symbol of at least two symbols assigned to a predetermined key of the portable terminal, if a first input time period elapses while key input is performed for the predetermined key;
displaying a second symbol of the at least two symbols assigned to the predetermined key, if the first input time period elapses while key input is performed for the predetermined key before lapse of a predetermined time period;
displaying the two symbols assigned to the key, if a second input time period, longer than the first input time period, elapses while the key input is performed for the predetermined key; and
continuously displaying the one symbol of the at least two symbols in a way that corresponds to the input time of the key, if a third input time period, longer than the second input time period, elapses while the key input is performed for the predetermined key.

5. A method according to claim 4, wherein the one symbol of the at least two symbols displayed is the first of the two symbols assigned to the predetermined key.

6. A method according to claim 4, wherein the second symbol of the at least two symbols displayed is a following symbol of the at least two symbols assigned to the predetermined key.

7. A method according to claim 4, wherein the two symbols displayed are displayed in the order of the symbols indicated on the predetermined key, with the second symbol displayed being the first displayed.

8. A method for inputting keys in which two symbols are assigned to each key, in a portable terminal, the method comprising the steps of:
displaying a first of the two symbols assigned to a predetermined key, if a first input time period elapses while key input is performed for the predetermined key;
displaying the two symbols assigned to the predetermined key, if a second input time period, longer than the first input time period, elapses while the key input is performed for the predetermined key; and
continuously displaying the first symbol of the two symbols in a way that corresponds to the input time of the predetermined key, if a third input time period, longer than the second input time period, elapses while the key input is performed for the predetermined key.

9. A method according to claim 8, wherein the two symbols displayed are displayed in an order of the first and second symbols.

10. A method for inputting keys in which two symbols are assigned to at least one key, in a portable terminal, the method comprising the steps of:
displaying a first of the two symbols assigned to a predetermined key of the portable terminal, if a first input time period elapses while key input is performed for the predetermined key;
displaying a second of the two symbols assigned to the predetermined key, if the first input time period elapses while key input is performed for the predetermined key before lapse of a predetermined time period;
displaying the two symbols assigned to the predetermined key, if a second input time period, longer than the first input time period, elapses while the key input is performed for the predetermined key; and
continuously displaying the second symbol of the two symbols in a way that corresponds to the input time of the key, if a third input time period, longer than the second input time period, elapses while the key input is performed for the predetermined key.

11. A method according to claim 10, wherein the two symbols displayed are displayed in an order of the second and first symbols.
